# EUROPÄISCHE PATENTSCHRIFT

(11) **EP 0 845 492 B1**
(45) Veröffentlichungstag und Bekanntmachung des Hinweises auf die Patenterteilung: **13.06.2001**
(21) Anmeldenummer: 97120062.1
(22) Anmeldetag: 17.11.1997
(51) Int. Cl.: C08K 5/09, C08K 5/103, C08K 5/20

(54) **Spezielle Wachsmischungen enthaltende thermoplastisch verarbeitbare Polyurethane**
Thermoplastic polyurethanes containing special wax mixtures
Polyuréthanes thermoplastiques contenant de mélanges spéciaux de cires

(30) Priorität: 28.11.1996 DE 19649290
(43) Veröffentlichungstag der Anmeldung: 03.06.1998
(73) Patentinhaber: BAYER AG, 51368 Leverkusen (DE)
(72) Erfinder: Müller, Friedemann, Dr., 41470 Neuss (DE); Bräuer, Wolfgang, Dr., 51375 Leverkusen (DE); Heidingsfeld, Herbert, 50226 Frechen (DE); Hoppe, Hans-Georg, 42799 Leichlingen (DE); Meister, Willi, Dr., 41539 Dormagen (DE); Winkler, Jürgen, 40764 Langenfeld (DE); Wolf, Karl-Heinz, Dr., 51061 Köln (DE); Wussow, Hans-Georg, Dr., 40597 Düsseldorf (DE)

(56) Entgegenhaltungen:
- EP-A- 0 153 639
- EP-A- 0 308 683
- EP-A- 0 579 080
- PATENT ABSTRACTS OF JAPAN vol. 015, no. 398 (C-0874), 9.Oktober 1991 & JP 03 163127 A (SUMITOMO BAYER URETHANE KK), 15.Juli 1991,
- PATENT ABSTRACTS OF JAPAN vol. 015, no. 027 (C-0797), 22.Januar 1991 & JP 02 265964 A (DYNIC CORP), 30.Oktober 1990,

## Beschreibung

Die Erfindung betrifft spezielle Wachsmischungen enthaltende thermoplastisch verarbeitbare Polyurethane, daraus hergestellte Filme, Folien, Spritzgießteile und Fasern sowie ein Verfahren zur kontinuierlichen Herstellung dieser thermoplastisch verarbeitbaren Polyurethane.

Thermoplastische Polyurethan-Elastomere (TPU) sind von technischer Bedeutung, da sie ausgezeichnete mechanische Eigenschaften zeigen und sich kostengünstig thermoplastisch verarbeiten lassen. Durch die Verwendung unterschiedlicher chemischer Aufbaukomponenten lassen sich ihre mechanischen Eigenschaften über einen großen Bereich variieren. Eine zusammenfassende Darstellung von TPU, ihre Eigenschaften und Anwendungen findet sich in Kunststoffe 68 (1978) 819 oder Kautschuk, Gummi, Kunststoffe 35 (1982) 568.

TPU werden aus linearen Polyolen, meist Polyester- oder Polyether-Polyolen, organischen Diisocyanaten und kurzkettigen Diolen (Kettenverlängerern) aufgebaut. Zusätzlich können nach dem Stand der Technik Katalysatoren zur Beschleunigung der Bildungsreaktion zugesetzt werden. Zur Einstellung der Eigenschaften können die molaren Verhältnisse der Aufbaukomponenten über einen breiten Bereich variiert werden. Bewährt haben sich molare Verhältnisse von Polyolen zu Kettenverlängerern von 1:1 bis 1:12. Hierdurch ergeben sich Produkte mit einer Härte von 70 Shore A bis 75 Shore D. Der Aufbau TPU kann entweder schrittweise (Prepolymerverfahren) oder durch die gleichzeitige Reaktion aller Komponenten in einer Stufe erfolgen (one shot-Verfahren). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Neben Katalysatoren können den TPU-Komponenten auch Hilfsmittel und Zusatzstoffe zugesetzt werden. Als Beispiel seien Wachse genannt, die sowohl bei der technischen Herstellung der TPU als auch ihrer Verarbeitung wichtige Aufgaben übernehmen. Das Wachs dient als friktionsminderndes inneres und äußeres Gleitmittel und verbessert so die Fließeigenschaften des TPU. Zusätzlich soll es als Trennmittel das Ankleben des TPU an das umgebende Material (z.B. das Werkzeug) verhindern und als Dispergator für andere Zusatzstoffe, z.B. Pigmente und Antiblockmittel, wirken.

Gemäß dem Stand der Technik werden als Wachse beispielsweise Fettsäureester wie Stearinsäureester und Montansäureester sowie deren Metallseifen eingesetzt, außerdem Fettsäureamide wie Stearylamide und Ölsäureamide, oder auch Polyethylenwachse. Eine Übersicht der in Thermoplasten eingesetzten Wachse findet sich in R.Gächter, H. Müller (Ed.): "Taschenbuch der Kunststoffadditive", 3. Ausgabe, Hanser Verlag, München 1989, S. 443ff.

Aufgrund der chemischen Reaktionsfähigkeit und der speziellen Verarbeitungs- und Gebrauchstemperaturen von TPU eignen sich viele der oben genannten Wachse nicht für den Einsatz in TPU. Es wurden daher bisher im wesentlichen Amidwachse verwendet, die eine gute Trennwirkung aufweisen, insbesondere Ethylen-bis-stearylamid. Daneben werden Montanesterwachse eingesetzt, die gute Gleitmittel-Eigenschaften bei geringer Flüchtigkeit zeigen (EP-A 308 683; EP-A 670 339; JP-A 5 63 431). Ein Nachteil der Amidwachse beim Einsatz in TPU ist aber deren Neigung zur Migration. Diese führt nach einiger Zeit zu einer Belagbildung auf dem Werkstück, was unerwünschte Veränderungen oberflächenabhängiger Eigenschaften zur Folge hat und auch die optischen Eigenschaften beeinträchtigt, insbesondere bei dünnwandigen Anwendungen wie Folien. Die Verwendung von Montanesterwachsen ist durch niedrige Trübungsgrenzen eingeschränkt. Bei einer nur befriedigenden Trennwirkung zeigen auch sie eine deutliche Migrationsneigung.

Es wurde nun gefunden, daß sich die durch die Migration des Entformungsmittels verursachten Probleme vermeiden lassen, wenn bei der Herstellung der TPU spezielle Wachsgemische eingesetzt werden.

Gegenstand der Erfindung sind somit thermoplastisch verarbeitbare Polyurethane, hergestellt durch Umsetzung der polyurethanbildenden Komponenten
A) organisches Diisocyanat,
B) lineares hydroxylterminiertes Polyol mit einem Molekulargewicht von 500 bis 5000,
C) Diol- oder Diamin-Kettenverlängerer mit einem Molekulargewicht von 60 bis 500,
wobei das Molverhältnis der NCO-Gruppen in A) zu den gegenüber Isocyanat reaktiven Gruppen in B) u. C) 0,9 bis 1,2 beträgt, sowie
a) 0,02 bis 0,8 Gew.%, bezogen auf die gesamte Produktmenge, eines Gemisches aus 95 Gew.-% ≥ x ≥ 20 Gew.-% an mit einem Diol veresterten aliphatischen Carbonsäuren mit 10 bis 45 Kohlenstoffatomen und (100-x) Gew.-% an Alkali- oder Erdalkalisalzen dieser aliphatischen Carbonsäuren und
b) 0,1 bis 2 Gew.-%, bezogen auf die gesamte Produktmenge, eines Wachses oder Gleitmittels aus der Gruppe der Fettsäureester, Fettsäureamide, Fettsäureesteramide oder Polyethylenwachse, wobei in b) nicht dieselben Fettsäureester verwendet werden wie in a).

Als organische Diisocyanate A) kommen aliphatische, cycloaliphatische, araliphatische, heterocyclische und aromatische Diisocyanate in Betracht, wie sie z.B. in Justus Liebigs Annalen der Chemie, 562 (1949) 75, beschrieben werden.

Im einzelnen seien beispielhaft genannt: aliphatische Diisocyanate wie Hexamethylendiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; aromatische Diisocyanate wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiiso-cyanatgehalt von größer als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat und Polyphenyl-polymethylen-polyisocyanaten.

Als Komponente B) werden lineare hydroxylterminierte Polyole mit einem Molekulargewicht von 500 bis 5000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin und Diole , wie Ethylenglykol, 1,3-Propylenglykol, 1,4-Butandiol und 1,6-Hexandiol. Gegebenenfalls können auch Mischungen von Startermolekülen eingesetzt werden.

Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden. Die im wesentlichen linearen Polyether-Diole können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure; daneben aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyester-Diole können einzeln oder in Form von Mischungen untereinander zur Anwendung kommen.

Als Kettenverlängerungsmittel C) werden Diole oder Diamine mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon, ethoxylierte Bisphenole, (cyclo)aliphatische Diamine, wie z.B. Isophorondiamin, Ethylendiamin, 1,2-Propylen-diamin, 1,3-Propylen-diamin, N-Methyl-propylendiamin-1,3, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und 3,5-Diethyl-2,6-toluylen-diamin und primäre ortho-, di-, tri- oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, eingesetzt werden. Beispielhaft genannt seien Alkohole wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und Zusatzstoffen, in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Erfindungsgemäß enthalten die TPU außerdem a) 0,02 bis 0,8 Gew.%, bezogen auf die gesamte Produktmenge, eines Gemisches aus 95 Gew.-% ≥ x ≥ 20 Gew.-% an mit einem Diol veresterten aliphatischen Carbonsäuren mit 10 bis 45 Kohlenstoffatomen und (100-x) Gew.-% an Alkali- oder Erdalkalisalzen dieser aliphatischer Carbonsäuren.

Kennzeichnend für diese Mischung ist, daß sie sowohl Carbonsäureester als auch das Metallsalz einer Carbonsäure enthält. Erfindungsgemäß eingesetzt werden beispielhaft die Ester und Salze der Ölsäure, Palmitinsäure, Stearylsäure, Montansäure, Erucasäure oder Cerotinsäure. Verestert sind diese beispielsweise mit Ethylenglykol, Propylenglykol, Butandiol, Pentandiol,Hexandiol, Diethylenglykol oder Dipropylenglykol. Das Carbonsäuresalz wird beispielweise durch Umsetzung mit den Hydroxiden des Natriums, Kaliums, Magnesiums oder Calciums hergestellt. Die erfindungsgemäße Wachskomponente a) kann sowohl aus der Mischung von Estern und Carboxylaten verschiedener Carbonsäuren als auch aus der Mischung von Estern und Carboxylaten der gleichen Carbonsäure bestehen. Letztere kann z.B. durch die Verseifung einer nur teilweise veresterten Carbonsäure hergestellt werden. Bevorzugt eingesetzt wird ein Gemisch aus mit Butandiol veresterter Montansäure und Calciummontanat.

Zusätzlich enthält die erfindungsgemäße Wachsmischung 0,1 bis 2 Gew.%, bezogen auf die gesamte Produktmenge, von an sich bekannten Wachskomponenten b). Diese Wachskomponenten b) können wahlweise Fettsäureester wie Stearinsäureester und Montansäureester, Fettsäureamide wie Stearylamide und Ölsäureamide, Fettsäureesteramide wie Stearylsäureamidalkylstearate, oder Polyethylenwachse sein. Es können auch Mischungen dieser Komponenten verwendet werden. Bevorzugt werden Montansäureester und Stearylamide eingesetzt, insbesondere Montansäureethylester und Bis-Ethylenstearylamid. Werden in Komponente b) Fettsäureester eingesetzt, so werden solche ausgewählt, die von den in a) eingesetzten verschieden sind.

Für die Herstellung der erfindungsgemäßen TPU geeignete Katalysatoren sind im Prinzip bekannt. Es eignen sich beispielsweise tertiäre Amine wie Triethylamin, Dimethylcyclohexylamin, N-Methylmorpholin, N,N'-Dimethylpiperazin, 2-(Dimethylaminoethoxy)ethanol, Diazabicyclo-(2,2,2)-octan, außerdem organische Metallverbindungen wie Titansäureester, organische Eisen-oder Zinnverbindungen. Beispiele sind Zinndiacetat, Zinndioctoat, Zinndilaurat oder auch die Zinndialkylsalze aliphatischer Carbonsäuren wie Dibutylzinndiacetat und Dibutylzinndilaurat oder ähnliche.

Bevorzugte Katalysatoren sind organische Metallverbindungen, insbesondere Titansäureester und organische Eisen- oder Zinnverbindungen.

Neben den TPU-Komponenten, den erfindungsgemäßen Wachsen und den Katalysatoren können auch andere Hilfsmittel und Zusatzstoffe zugesetzt werden. Genannt seien Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe, z.B. nach im Prinzip bekannten Verfahren hergestellte anorganische Fasern, die auch mit einer Schlichte beaufschlagt sein können. Nähere Angaben über die genannten Hilfs- und Zusatzstoffe finden sich beispielsweise in J. H. Saunders, K. C. Frisch: "High Polymers", Band XVI, Polyurethane, Teil 1 und 2, Interscience Publishers 1962 bzw. 1964, oder R. Gächter, H. Müller (Ed.): "Taschenbuch für Kunststoff-Additive", 3. Ausgabe, Hanser Verlag, München 1989, oder der DE-A 29 01 774.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Weiterhin zur Einarbeitung geeignet sind handelsübliche Weichmacher wie Phosphate, Phthalate, Adipate, Sebacate und Alkylsulfonsäureester.

Gegenstand der Erfindung sind auch Verfahren zur Herstellung der erfindungsgemäßen TPU.

Diese können kontinuierlich im sogenannten Extruderverfahren, z.B. in einem Mehrwellenextruder, hergestellt werden. Die Dosierung der TPU-Komponenten A), B) und C) kann gleichzeitig, d.h. im one-shot-Verfahren, oder nacheinander, d.h. nach einem Prepolymer-Verfahren, erfolgen. Dabei kann das Prepolymer sowohl batchweise vorgelegt als auch kontinuierlich in einem Teil des Extruders oder in einem separaten vorgeschalteten Prepolymeraggregat hergestellt werden.

Die erfindungsgemäßen Wachse können kontinuierlich zu der TPU-Reaktion in den Extruder, bevorzugt in das erste Extrudergehäuse, dosiert werden. Die Dosierung erfolgt entweder bei Raumtemperatur im festen Aggregatzustand oder in flüssiger Form bei 70 bis 160°C.

Es ist aber auch möglich, die erfindungsgemäßen Wachse in das vorab hergestellte und in einem Extruder wieder aufgeschmolzene TPU zu dosieren und zu compoundieren. Sie können aber auch in einer weiteren Variante vor der Reaktion homogen in die Polyol-Vorlage eingemischt und mit ihr zusammen in die Reaktion dosiert werden.

Gegenstand der Erfindung ist ebenfalls die Verwendung von Wachsmischungen aus
a) 1 ≥ y ≥ 88 Gew.-%, bezogen auf die gesamte Wachsmischung, eines Gemisches aus 95 Gew.-% ≥ x ≥ 20 Gew.-% an mit einem Diol veresterten aliphatischen Carbonsäuren mit 10 bis 45 Kohlenstoffatomen und (100-x) Gew.-% an Alkali- oder Erdalkalisalzen dieser aliphatischer Carbonsäuren und
b) (100-y) Gew.-%, bezogen auf die gesamte Wachsmischung, eines Wachses oder Gleitmittels aus der Gruppe der Fettsäureester, Fettsäureamide, Fettsäureesteramide oder Polyethylenwachse, wobei in b) nicht dieselben Fettsäureester verwendet werden wie in a)
in thermoplastisch verarbeitbaren Polyurethanen.

Die so erhaltenen TPU-Produkte besitzen gute mechanische und elastische Eigenschaften. Zusätzlich haben sie ein hervorragendes Verarbeitungsverhalten. Aus ihrer Schmelze lassen sich Filme, Folien oder Fasern von großer Homogenität herstellen. Die Filme und Folien, die bevorzugt Härten von 65 bis 95 Shore A zeigen, haben aufgrund ihrer geringen Klebeneigung ein gutes Trennverhalten. Da keine Belagbildung durch Migration der erfindungsgemäßen Wachse an die Oberfläche auftritt, werden das optische Bild und die Oberflächeneigenschaften auch bei langer Lagerzeit nicht beeinträchtigt. Auch bei der Verarbeitung zu Spritzgießartikeln macht sich die geringe Migrationsneigung bemerkbar. Wie bei den Filmen und Folien wird auch nach langer Lagerzeit keinerlei Belagbildung beobachtet.

### Beispiele

### TPU-Rezeptur :

| | |
|---|---|
| Poly-butandiol-1,4-adipat (Molekulargewicht ca. 2200) | 100 Gew.-Teile |
| Butandiol | 11 Gew.-Teile |
| Diphenylmethandiisocyanat (MDI-flüssig, 50°C) | 42 Gew.-Teile |
| Zinndioctoat | 150 ppm |

### TPU-Herstellverfahren:

Kontinuierliche TPU-Reaktion im gemischten Rohrmischer/Extruder (ZSK 83, Fa. Werner/Pfleiderer) nach dem bekannten Prepolymerfahren (EP-A 571 830 und EP-A 571 828). Die Gehäusetemperaturen der 13 Gehäuse liegen bei 100°C bis 220°C. Die Drehzahl der Schnecke ist auf 300 U/min eingestellt. Die Gesamtdosierung liegt bei 500 kg/h. Das TPU wird als Schmelzestrang extrudiert, im Wasser abgekühlt und granuliert.

### Wachsdosierung

Das Wachs bzw. die Wachsmischung wird nach Maßgabe der Tabelle 1 kontinuierlich
a) während des oben beschriebenen TPU-Herstellungsprozesses in das erste Gehäuse des Extruders dosiert, oder
b) bei der Reextrusion des nach dem oben beschriebenen Verfahren hergestellten TPU-Granulates in einem Extruder vom Typ ZSK 83 in Gehäuse 1 zudosiert. Die Gehäusetemperaturen betragen 200°C bis 220°C; die Drehzahl der Schnecke 100 U/min. Das TPU wird als Schmelzestrang extrudiert, im Wasser abgekühlt und granuliert.

### Blasfolienherstellung

Das TPU-Granulat wird in einem Einwellen-Extruder (Einwellen-Extruder 30/25D Plasticorder PL 2000-6, Fa. Brabender) aufgeschmolzen (Dosierung 3 kg/h; 185-205°C) und durch einen Folienblaskopf zu einer Schlauchfolie extrudiert.

### Herstellung der Spritzgießplatten

Das TPU-Granulat wird in einer Spritzgießmaschine (Spritzgießmaschine D 60, 32er Schnecke, Mannesmann AG) aufgeschmolzen (Massetemperatur ca. 225°C) und zu Platten geformt (Formtemperatur 40°C; Plattengröße: 125x45x2 mm).

Die wichtigsten Eigenschaften der so hergestellten Formkörper sind in den Tabellen 1 und 2 angegeben.

**Tabelle 1:**

| **Folienbeurteilung** | | | | | | |
|---|---|---|---|---|---|---|
| Beispiele | Wachsdosierung | Wachs a) | Gew.% | Wachs b) | Gew.% | Folien-Belagbildung Lagerzeit 6 Monate |
| 1 | Reextrusion | - | - | 1 | 0,14 | stark |
| 2 | Reextrusion | 2 | 0,06 | 1 | 0,14 | nein |
| 3 | Reextrusion | 2 | 0,25 | 1 | 0,14 | nein |
| 4 | Reextrusion | 2 | 0,50 | 1 | 0,14 | wenig |
| 5 | Reaktion | 2 | 0,10 | 1 | 0,70 | nein |
| 6 | Reextrusion | - | - | 3 | 0,14 | etwas |
| 7 | Reextrusion | 2 | 0,30 | 3 | 0,30 | nein |

### Beispiele 1 und 6 = nicht erfindungsgemäße Vergleichsbeispiele

Wachs 1 = Ethylen-bis-stearylamid (Höchstwachs C)

Wachs 2 = Butylmontanat/Calciummontanat-Gemisch (Höchstwachs OP)

Wachs 3 = Ethylmontanat (Höchstwachs E)

Folien, die die erfindungsgemäße Wachsmischung enthalten, weisen auch nach längerer Zeit keine erkennbare Belagbildung auf. Dadurch werden das optische Bild der Folie und die Oberflächeneigenschaften, wie z.B. die Haftung an andere Polymere bei Beschichtung, nicht beeinträchtigt.

**Tabelle 2**

| **Ausschwitztest von Spritzgießplatten / Lagerung bei 80**°**C** | | | |
|---|---|---|---|
| Beispiel | Belagbildung: sofort | nach 1 Woche | nach 4 Wochen |
| 5 | nein | nein | nein |

Die mit der erfindungsgemäßen Wachsmischung hergestellten Spritzgießplatten weisen auch nach vierwöchiger Lagerung bei 80°C keine Belagbildung auf.

## Patentansprüche

1. Thermoplastisch verarbeitbares Polyurethan, hergestellt durch Umsetzung der polyurethanbildenden Komponenten
A) organisches Diisocyanat,
B) lineares hydroxylterminiertes Polyol mit einem Molgewicht von 500 bis 5000,
C) Diol- oder Diamin-Kettenverlängerer mit einem Molgewicht von 60 bis 500,
wobei das Molverhältnis der NCO-Gruppen in A) zu den gegenüber Isocyanat reaktiven Gruppen in B) und C) 0,9 bis 1,2 beträgt, sowie
a) 0,02 bis 0,8 Gew.%, bezogen auf die gesamte Produktmenge, eines Gemisches aus 95 Gew.-% ≥ x ≥ 20 Gew.-% an mit einem Diol veresterten aliphatischen Carbonsäuren mit 10 bis 45 Kohlenstoffatomen und (100-x) Gew.-% an Alkali- oder Erdalkalisalzen dieser aliphatischen Carbonsäuren und
b) 0,1 bis 2 Gew.-%, bezogen auf die gesamte Produktmenge, eines Wachses oder Gleitmittels aus der Gruppe der Fettsäureester, Fettsäureamide, Fettsäureesteramide oder Polyethylenwachse, wobei in b) nicht dieselben Fettsäureester verwendet werden wie in a).

2. Thermoplastisch verarbeitbares Polyurethan gemäß Anspruch 1, bei dem als Wachskomponente a) ein Gemisch von mit Butylenglykol veresterter Montansäure und Calciummontanat und als Wachskomponente b) mit Ethylenglykol veresterte Montansäure oder Bis-Ethylenstearylamid verwendet werden.

3. Film, Folie oder Faser aus einem thermoplastisch verarbeitbaren Polyurethan gemäß Anspruch 1.

4. Spritzgießteil aus einem thermoplastisch verarbeitbaren Polyurethan gemäß Anspruch 1.

5. Verfahren zur kontinuierlichen Herstellung eines thermoplastisch verarbeitbaren Polyurethans gemäß Anspruch 1, bei dem die Wachskomponenten a) und b) zusammen mit den Reaktionskomponenten A), B) und C) und gegebenenfalls weiteren Hilfsstoffen in einen Extruder dosiert werden.

6. Verwendung von Wachsmischungen aus
a) 1 ≥ y ≥ 88 Gew.-%, bezogen auf die gesamte Wachsmischung, eines Gemisches aus 95 Gew.-% ≥ x ≥ 20 Gew.-% an mit einem Diol veresterten aliphatischen Carbonsäuren mit 10 bis 45 Kohlenstoffatomen und (100-x) Gew.-% an Alkali- oder Erdalkalisalzen aliphatischer Carbonsäuren mit 10 bis 45 Kohlenstoffatomen, und
b) (100-y) Gew.-%, bezogen auf die gesamte Wachsmischung, eines Wachses oder Gleitmittels aus der Gruppe der Fettsäureester, Fettsäureamide, Fettsäureesteramide oder Polyethylenwachse, wobei in b) nicht dieselben Fettsäureester verwendet werden wie in a)
in thermoplastisch verarbeitbaren Polyurethanen.

## Claims

1. Thermoplastically workable polyurethane, prepared by the reaction of the polyurethane-forming components:
A) organic diisocyanate,
B) linear hydroxyl-terminated polyol having a molecular weight of from 500 to 5000,
C) diol chain extenders or diamine chain extenders having a molecular weight of from 60 to 500,
wherein the molar ratio of the NCO groups in A) to the groups in B) and C) which are reactive with isocyanate is 0.9 to 1.2, and
a) from 0.02 to 0.8 wt.%, based on the total quantity of product, of a mixture comprising 95 wt.% ≥ x ≥ 20 wt.% of aliphatic carboxylic acids having 10 to 45 carbon atoms, esterified with a diol, and (100-x) wt.% of alkali metal salts or alkaline earth salts of these aliphatic carboxylic acids and
b) from 0.1 to 2 wt.%, based on the total quantity of product, of a wax or lubricant selected from among the fatty acid esters, fatty amides, fatty ester amides or polyethylene waxes, with fatty acid esters used in b) not being the same as those in a).

2. Thermoplastically workable polyurethane according to claim 1, wherein a mixture of montanic acid esterified with butylene glycol and calcium montanate is used as wax component a) and montanic acid esterified with ethylene glycol, or bisethylene stearylamide, is used as wax component b).

3. Film, foil or fibre made from a thermoplastically workable polyurethane according to claim 1.

4. Injection-moulded part made from a thermoplastically workable polyurethane according to claim 1.

5. Process for the continuous preparation of a thermoplastically workable polyurethane according to claim 1, wherein the wax components a) and b) together with the reaction components A), B) and C) and optionally additional auxiliary substances are metered into an extruder.

6. Use of wax mixtures made of
a) 1 ≥ y ≥ 88 wt.%, based on the total wax mixture, of a mixture comprising 95 wt.% ≥ x ≥ 20 wt.% of aliphatic carboxylic acids having 10 to 45 carbon atoms, esterified with a diol, and (100-x) wt.% of alkali metal salts or alkaline earth salts of aliphatic carboxylic acids having 10 to 45 carbon atoms, and
b) (100-y) wt.%, based on the total wax mixture, of a wax or lubricant selected from among the fatty acid esters, fatty amides, fatty ester amides or polyethylene waxes, with fatty acid esters used in b) not being the same as those in a) in thermoplastically workable polyurethanes.

## Revendications

1. Polyuréthanne apte au travail thermoplastique, préparé par réaction des composants de formation suivants :
A) un diisocyanate organique,
B) un polyol linéaire à groupes terminaux hydroxy de poids moléculaire 500 à 5000,
C) des agents d'allongement des chaînes du type diol ou diamine, de poids moléculaire 60 à 500,
à un rapport molaire de 0,9 à 1,2 entre les groupes NCO de A) et les groupes réactifs avec les groupes isocyanates de B) et C), et
a) 0,02 à 0,8 % en poids, par rapport au poids total du produit, d'un mélange de 95 % en poids ≥ x ≥ 20 % en poids d'acides carboxyliques aliphatiques contenant 10 à 45 atomes de carbone, estérifiés par un diol et (100-x) % en poids de sels alcalins ou alcalino-terreux de ces acides carboxyliques aliphatiques, et
b) 0,1 à 2 % en poids, par rapport au poids total du produit, d'une cire ou d'un agent lubrifiant du groupe des esters d'acides gras, des amides d'acides gras, des ester-amides d'acides gras ou des cires de polyéthylène, sous réserve que l'on n'utilise pas dans b) les mêmes esters d'acides gras que dans a).

2. Polyuréthanne apte au travail thermoplastique selon la revendication 1, pour lequel on a utilisé en tant que composant cireux a) un mélange d'acide montanique estérifié par le butylèneglycol et de montanate de calcium et en tant que composant cireux b) de l'acide montanique estérifié par l'éthylèneglycol ou du bis-éthylène-stéarylamide.

3. Pellicule, feuille ou fibre consistant en un polyuréthanne apte au travail thermoplastique selon la revendication 1.

4. Pièce moulée par injection consistant en un polyuréthanne apte au travail thermoplastique selon la revendication 1.

5. Procédé pour la préparation continue d'un polyuréthanne apte au travail thermoplastique selon la revendication 1, dans lequel on introduit les composants cireux a) et b) avec les composants de synthèse A), B) et C) et le cas échéant d'autres produits auxiliaires, dans une extrudeuse.

6. Utilisation de mélanges de cires consistant en
a) 1 ≥ y ≥ 88 % en poids, par rapport au poids total du mélange de cires, d'un mélange de 95 % en poids ≥ x ≥ 20 % en poids d'acides carboxyliques aliphatiques contenant 10 à 45 atomes de carbone, estérifiés par un diol et (100-x) % en poids de sels alcalins ou alcalino-terreux d'acides carboxyliques aliphatiques contenant 10 à 45 atomes de carbone, et
b) (100-y) % en poids, par rapport au poids total du mélange de cires, d'une cire ou d'un agent lubrifiant du groupe des esters d'acides gras, des amides d'acides gras, des ester-amides d'acides gras ou des cires de polyéthylène, sous réserve que dans b), on n'utilise pas les mêmes esters d'acides gras que dans a),
dans des polyuréthannes aptes au travail thermoplastique.
